# EUROPEAN PATENT APPLICATION

(11) **EP 3 035 638 A1**
(43) Date of publication of application: **22.06.2016**
(21) Application number: 15200923.9
(22) Date of filing: 17.12.2015
(51) Int. Cl.: H04L 29/06

(54) **INTEREST ACKNOWLEDGEMENTS FOR INFORMATION CENTRIC NETWORKING**

(30) Priority: 17.12.2014 US 201414572965
(71) Applicant: Cisco Technology, Inc., San Jose, CA 95134-1706 (US)
(72) Inventor: STAPP, Mark, Belmont, MA 02478 (US); MOISEENKO, Ilya, Los Angeles, CA 90024 (US)
(74) Representative: Clark, Jane Anne

(57) **Abstract**

A network device configured for information centric networking (ICN) receives an Interest having traversed a path in an ICN network from a consumer. The Interest requests data by name. The network device determines whether data satisfying the Interest is available in the network device, and if it is determined that data satisfying the Interest is available in the network device, the network device generates an Interest acknowledgement (InterestAck) that includes the data name. The network device forwards the InterestAck to the consumer along the path in reverse based on the data name. The network device retrieves the data satisfying the Interest, and forwards the data along the reverse path based on the data name.

## Description

### TECHNICAL FIELD

The present disclosure relates to Information Centric Networking, including Named Data Networking (NDN) and Content-Centric Networking (CCN).

### BACKGROUND

Applications that communicate over a network often operate at time-scales that are substantially different from an end-to-end communication latency of the network. A network packet typically requires a fraction of a second - possibly a small fraction of a second - to travel from a client to a server, or from one instance of the application to another, over the network. In contrast, application processing may well require an order of magnitude more time to complete. Information Centric Networking (ICN) architectures that use stateful forwarding, such as Named Data Networking (NDN) and Content-Centric Networking (CCN), may offer only a single time-to-live or lifetime for a stateful forwarding path in an ICN network based on a lifetime of an Interest sent by a client/consumer to request data across the ICN network. If the Interest lifetime is on the order of network latency, the stateful path may expire before the Interest can be processed. If the Interest lifetime is matched to the application processing or servicing time to satisfy the Interest, the ability of the client/consumer to detect and re-transmit Interests that have been lost in transit due to congestion or link failure becomes delayed and inefficient.

Aspects and examples of the present invention are set out in the appended claims.

### BRIEF DESCRIPTION OF THE DRAWINGS

FIG. 1 is a diagram of an Information Centric Networking (ICN) environment in which Interest acknowledgments are provided, according to an example embodiment.
FIG. 2A is an illustration of an Interest packet, according to an example embodiment.
FIG. 2B is an illustration of an Interest acknowledgement, according to an example embodiment.
FIG. 2C is an illustration of a Data packet, according to an example embodiment.
FIG. 3 is a block diagram of an ICN network device/node, according to an embodiment.
FIG. 4 is a block diagram of Interest, Interest acknowledgment (InterestAck), and Data packet flow paths through the ICN network node of FIG. 3, according to an example embodiment.
FIG. 5 is a detailed illustration of data structures corresponding to the ICN network node data structures introduced in FIG. 3, according to an example embodiment.
FIG. 6 is a flowchart of a method of processing Interests and InterestAcks performed in the node of FIG. 3, according to an example embodiment.
FIG. 7 is a flowchart of a method of retransmitting Interests performed in the node of FIG. 3, according to an example embodiment.
FIG. 8 is a flowchart of a method of performing batch Interest processing in the node of FIG. 3, according to an example embodiment.
FIG. 9 is a block diagram of a data producer from FIG. 1, according to an example embodiment.

### DESCRIPTION OF EXAMPLE EMBODIMENTS

### Overview

In a first embodiment, a network device, among network devices configured to perform information centric networking (ICN), receives an Interest having traversed a path in the ICN network from a consumer. The Interest requests data by name. The network device determines whether data satisfying the Interest is available in the network device, and if it is determined that data satisfying the Interest is available in the network device, the network device generates an Interest acknowledgement (InterestAck) that includes the data name. The network device forwards the InterestAck to the consumer along the path in reverse based on the data name. The network device retrieves the data satisfying the Interest, and forwards the data along the reverse path based on the data name.

In a second embodiment, the network device receives a current Interest from a current consumer as the current Interest traverses a current path from the current consumer to a data responder. The current Interest requests data by name. The network device determines if a previous Interest requesting the named data has been received. If a previous Interest requesting the named data has been received, the network device determines if an Interest acknowledgement (InterestAck) acknowledging the previous Interest has been received from a data responder. If an InterestAck has been received, the network device forwards a copy of the InterestAck to the current consumer along the current path in reverse, without forwarding the current Interest to the data responder.

### Example Embodiments

Information Centric Networking (ICN) uses stateful (i.e., state-based) forwarding of Interest and Data packets within an ICN network, as will be described in detail below. Examples of ICN include both Named Data Networking (NDN) and Content-Centric Networking (CCN). Embodiments presented herein introduce Interest acknowledgements (InterestAcks) associated with Interest-data exchanges and related processing of the InerestAcks.

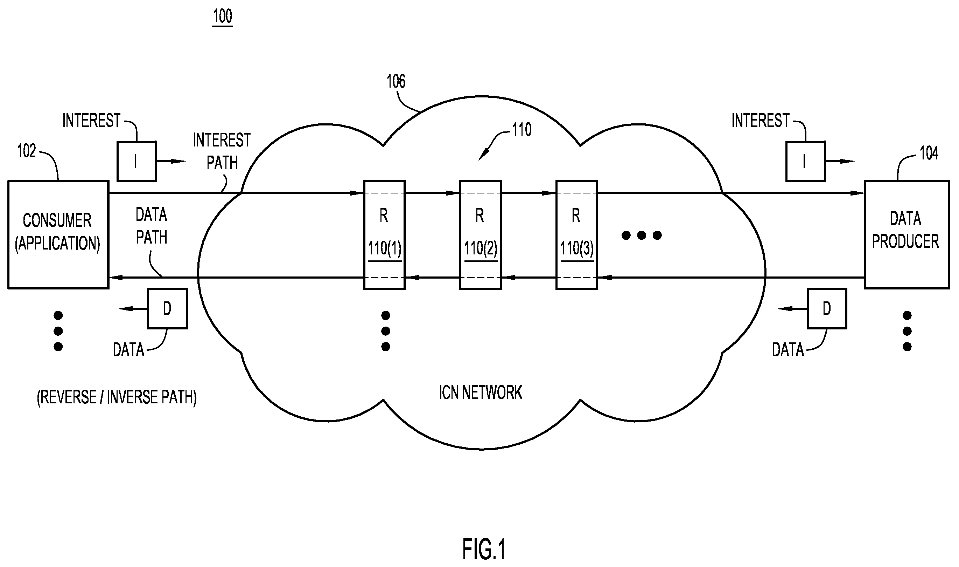

With reference to FIG. 1, a block diagram is shown of an example ICN environment 100 in which embodiments presented herein may be implemented. Such embodiments apply equally to both NDN and CCN, which use stateful forwarding that bases packet switching and/or routing on a name of content in a packet. The embodiments support ICN stateful forwarding while also permitting ICN network devices to detect and recover from lost Interest transmissions, efficiently. ICN environment 100 includes at least one consumer application 102 (also referred to simply as "consumer" 102 or "requestor" 102) to request data, at least one data producer 104 to store and produce the data responsive to the requests, and an ICN network 106 including multiple network nodes/devices 110 (e.g., nodes (110(1), 110(2), and 110(3), and so on) to route the data requests and data between the consumer application and the data producer. Network nodes 110 may be network routers or switches, for example.

In ICN environment 100, communication between consumer 102, data producer 104, and nodes 110 may include exchanges of two types of packets or messages: Interest (I) and Data packet (D). Both types of packets/messages carry a name that identifies a piece of data (i.e., a data object) that can be transmitted in one Data packet. Consumer 102 puts the name of a desired data object into an Interest and sends the Interest to producer 104 along an Interest or forward path through ICN network 106. Nodes 110 use this name to forward the Interest toward data producer 104 along the Interest path. Paths between adjacent nodes 110 may take the form of any suitable network connections between the nodes, including virtual tunnels, and are referred to as "path links" or simply "links."

If the Interest reaches one of nodes 110 that has the requested data already stored therein (for example, because of a previous request for the same data object), the node 110 will return a Data packet that contains the data object back to consumer 102 along a Data path. The Data packet includes the name of the data/content together with a signature by the producer's key that binds the name to the content. If none of nodes 110 includes the data to satisfy the Interest, the Interest will be forwarded all the way to producer 104, and producer 104 will return the requested data in the Data packet via network 106. The one of either the node 110 or producer 104 that returns the requested data is referred to herein as the "data responder" with respect to the Interest. The returned Data packet follows in reverse the Interest path back to consumer 102. Thus, the Data path is also referred to as the "reverse path" or the "inverse path" of the Interest/forward path. The forwarding of the Interest along the Interest path and of the Data packet along the reverse path by each node 110 is based on the name of the data, not source and destination addresses as used, e.g., with Internet Protocol (IP) routing.

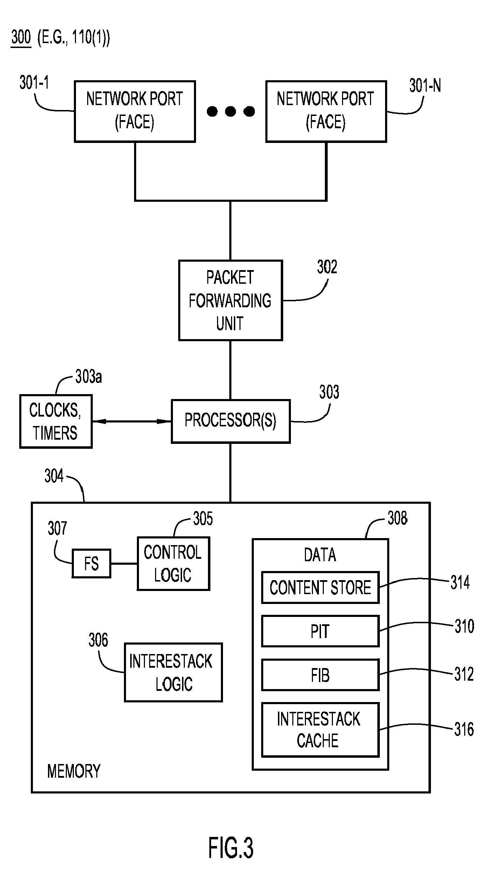

As the Interest traverses nodes 110 along the Interest path, each node stores state information in an entry of a local Pending Interest Table (PIT) (discussed more fully below in connection with FIGs. 3-5) that associates incoming and outgoing (i.e., forwarding) ports or faces of the node traversed by the Interest with the name of the content requested by the Interest. The state information in the PIT entry enables each of nodes 110 to forward the Data packet that satisfies that Interest on the reverse path to consumer 102. The state information in the PIT entry also includes an Interest lifetime associated with the Interest. The PIT entry, the Interest, and thus the stateful path of chained PIT entries (in the nodes 110) traversed by the Interest all expire with the Interest lifetime. There are several problems that may arise from the role that the Interest lifetime and its expiry play.

First, the Interest lifetime may be on the order of a network round-trip time (RTT). The RTT is an elapsed time from when consumer 102 sends the Interest to when the consumer receives the Data packet that satisfies the Interest. If the Interest lifetime is on the order of the RTT, the Interest lifetime may not be long enough to accommodate application processing at the data responder (e.g., producer 104 or an intermediate node among nodes 110). The application processing time (also referred to as the "service time") is the time required to service the Interest, i.e., retrieve the data requested by the Interest, and send the resulting Data packet. In that case, the stateful forwarding path may expire with the Interest before the service time is complete, which would prevent the Data packet from ever reaching consumer 102.

Second, when an Interest received at one of nodes 110 has resulted in a local PIT entry and been forwarded, subsequently received Interests that request data/content by the same name will be associated with the existing PIT entry and will not be forwarded during the lifetime of the original Interest. If Interest lifetimes are long enough to accommodate service times at data responders, this has the effect of blocking detection and retransmission of lost Interests.

Finally, Interests from different consumers (e.g., different instances of consumer 102 in FIG. 1) requesting content with the same name share fate if the Interests reach a common one of nodes 110. The first received Interest establishes the PIT entry/state for the named content. Subsequent Interests for the named content become subject to the lifetime of the first Interest; all of the Interests will expire when the first Interest expires. If the different consumers have different expectations of when their respective Interests will expire, the PIT entry and Interest/Data packet forwarding behavior become unpredictable.

Embodiments presented herein introduce a new, compact Interest acknowledgement (referred to simply as an "InterestAck") for use in ICN. Only a data producer capable of satisfying an Interest generates and forwards an InterestAck back to consumer 102 to acknowledge receipt of the Interest from the consumer, and the InterestAck is said to correspond to the Interest that the InterestAck acknowledges. The InterestAck carries the data/content name as the corresponding Interest. If the InterestAck is received at one of nodes 110 that cannot service/satisfy the Interest, that node will not generate an InterestAck. The InterestAck traverses in reverse the Interest path from the data responder back to consumer 102 much like Data packets. Each of nodes 110 traversed by the InterestAck on the reverse path uses the data name in the InterestAck to search for a corresponding local PIT entry that matches the data name and then forward the InterestAck to the next node leading back to consumer 102 based on the state information in the found local PIT entry.

If multiple consumers (e.g., consumers 102) have sent respective Interests with the same data name, there may be multiple reverse paths indicated in the state information of a PIT entry tied to that data name in a given one of nodes 110. In that case, the given node forwards a copy of the InterestAck on each of the multiple reverse paths indicated in the PIT entry.

Each of nodes 110 maintains the PIT entry after the InterestAck has been forwarded by that node in expectation that a Data packet will follow and also need to be forwarded on the reverse path. In other words, the forwarding of InterestAcks from a given one of nodes 110 does not result in the removal of the corresponding PIT entry, whereas forwarding of the Data packet does result in the removal of the PIT entry. Each of nodes 110 traversed by an InterestAck may cache the InterestAck for a lifetime of the PIT entry for the corresponding/associated Interest. A cached InterestAck must be discarded when the associated PIT entry (i.e., the PIT entry for the corresponding Interest) is removed, whether through receipt of a Data packet that satisfies the corresponding Interest, an error message, or after the corresponding Interest lifetime expiration. A cached InerestAck may also be discarded with an associated InterestAck lifetime expires.

In accordance with another embodiment, presented are various methods for using an InterestAck in nodes 110, such as in rate-limited retransmission of Interest messages.

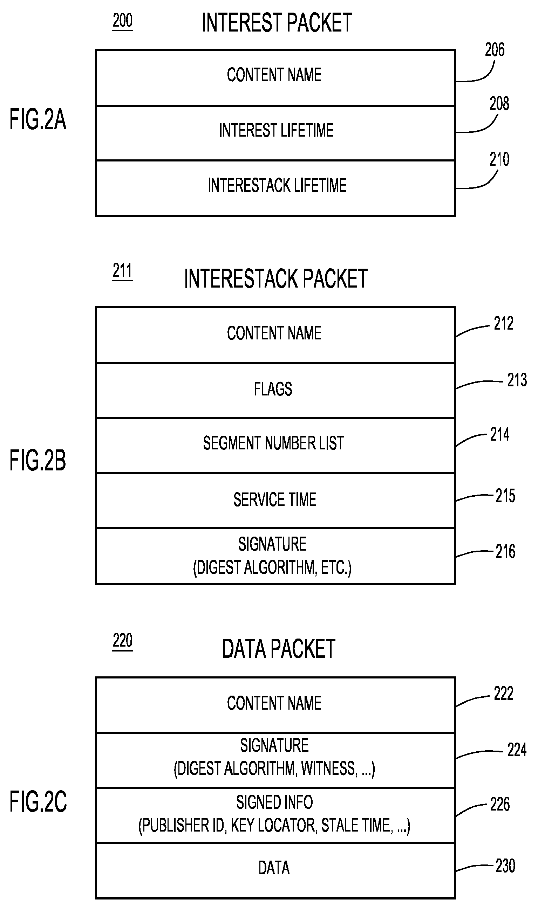

Example formats for an Interest packet, an InterestAck packet, and a Data packet are now described in connection with FIGs. 2A-2C, respectively.

With reference to FIG. 2A, there is an illustration of an example of an Interest packet 200 (i.e., Interest 200). Interest 200 includes: a data/content name 206 of the requested data (referred to as "named data"); a field 208 to carry an Interest lifetime or timeout period; and an optional field 210 to carry an InterestAck lifetime that represents an elapsed time by which an InterestAck corresponding to the Interest is expected to be received from a data producer. Interest lifetime 208 and InterestAck lifetime 210 may each be represented as a multi-bit integer field, such as a 32-bit integer field, where the least-significant-bit (LSB) may be on the order of microseconds or milliseconds, for example. Other bit-widths and time resolutions are possible.

With reference to FIG. 2B, there is an illustration of an example InterestAck packet 211 (i.e., InterestAck 211). A data responder issues InterestAck 211 to acknowledge receipt of Interest 200. InterestAck 211 is preferably compact in size to minimize any chance that the InterestAck will cause congestion or interfere with ICN Interest/Data packet flow balance. InterestAck 211 includes a data/content name 212, which may be a copy of data/content name 206 of Interest 200 that the InterestAck acknowledges (i.e., to which the InterestAck corresponds). Alternatively, data name 212 may be a hashed name, i.e., a hash of data name 206. For example, data producer 104 may hash data name 206 using any known or hereafter developed hash algorithm, and store the resulting hashed name as data name 212 in InterestAck 211.

InterestAck 211 also includes a flags field 213 to indicate a use/non-use of a hashed name as data name 212. Alternatively, a predetermined data name prefix (for example, '/ack/' or '/intack/') may be used to indicate the use of a hashed name. Flags field 213 may also indicate a use/non-use of a segment number list/bit field in a next field 214 (described below) when the InterestAck acknowledges multiple related Interests.

InterestAck 211 may also include segment number list/bit field 214 used in a batch embodiment in which the InterestAck represents a single batch InterestAck that acknowledges multiple related Interests, i.e., a batch of related Interests. In this batch embodiment, data responder 204 receives Interests 200 from consumer 102 in batches and, for improved efficiency, acknowledge the batch of Interests using a single batch InterestAck 211. In an example, batch InterestAck 211 uses a data name 212 from one Interest 200 in the batch of Interests as a base segment number. Segment number list/bit field 214 then represents a bitmask of segment number offsets from the base segment number, where bits in the segment number list/bit field indicate the Interest name segments being acknowledged. In another example, data name 212 in batch InterestAck 211 carries a prefix common to several related Interests 200, and field 214 in the InterestAck carries a list of suffixes corresponding to each Interest. Other batch embodiments are also possible.

InterestAck 211 may also include the following fields: a service time indicator 215 to indicate an estimate of how long it should take a data producer to respond to an Interest with data that satisfies that Interest; a signature and miscellaneous field 216 to include (i) a signature, if the InterestAck is signed, (ii) an identifier of a signature algorithm used to sign the InterestAck, (iii) a hash algorithm (e.g., SHA-256) used to produce a hashed name for data name 212, (iv) a message digest, (v) a nonce, and (vi) a time stamp. A data responder may generate and forward signed InterestAcks with a signature in field 216, much as the data responder may produce signed Data packets (see FIG. 2C). Since adding signature information to InterestAck 211 increases its size, data responders may make a tradeoff between concerns about network bandwidth/congestion, and stronger resistance to spoofed InterestAcks to determine whether to include the signature.

In another embodiment, InterestAck 211 may include an InterestAck lifetime.

With reference to FIG. 2C, there is an illustration of an example Data packet 220 (i.e., Data 220). Data 220 includes a name 222 (referred to as a "content name" or "data name") of content carried by the Data; an optional signature 224 and related information 226, including signed information, a publisher identifier, a key locator, and timestamps; and the named data/content 230 carried by Data 220.

Before embodiments using InterestAck 211 are described in detail, an example architecture and operation of one of network nodes 110 in which the embodiments may be implemented is described with reference to FIGs. 3-5.

Reference is now made to FIG. 3, which is a block diagram of an example ICN node or network device 300 representative of each of ICN nodes 110 in ICN environment 100. ICN node 300 may be a network device, such as a router or switch, which has Interest and Data packet forwarding capabilities, as well as computing/data processing capabilities to implement the queuing delay embodiments described herein. To this end, ICN node 300 includes a plurality of network ports or faces 301-1 through 301-N (also referred to as "interfaces") to receive and forward/transmit Interests and Data packets, a packet forwarding unit 302 to route the Interest and Data packets between the network ports/faces, a processor 303 (or multiple processors), memory 304, and clocks/timers 303a controlled and accessed by processor 303.

Memory 304 may include read only memory (ROM), random access memory (RAM), magnetic disk storage media devices, optical storage media devices, flash memory devices, electrical, optical, or other physical/tangible (non-transitory) memory storage devices. The processor 303 is, for example, a microprocessor or a microcontroller that executes instructions stored in memory. Thus, in general, memory 304 may include one or more tangible computer readable storage media (e.g., a memory device) encoded with software comprising computer executable instructions and when the software is executed (by the processor 304) it is operable to perform the operations described herein. For example, memory 304 stores Control logic 305 to provide overall control of network node 300 and InterestAck logic 306 to perform processing related to InterestAcks described herein. Either Control logic 305 or InterestAck logic 306 may include a Forwarding Strategy (FS) module 307 that operates in conjunction with packet forwarding unit 302 to implement an adaptive forwarding strategy, which determines whether, when, and where to forward each Interest.

Memory 304 also stores data 308 produced and/or used by logic 305-307. In certain embodiments, Data 308 includes one or more of data structures as shown in FIG. 3. A Pending Interest Table (PIT) 310 stores entries for pending/received Interests that have not yet been satisfied, where each entry includes the data name carried in the Interest together with node incoming and outgoing faces/interfaces traversed by the Interest. A Forwarding Information Base (FIB) 312 stores name-prefix based forwarding information, in addition to other information used to control or configure packet forwarding. A Content Store (CS) 314 caches or stores Data that has been retrieved from a data responder (e.g., data producer 104 or other one of upstream nodes 110) in a most recent Interest/Data retrieval cycle, or has already been retrieved in a previous data retrieval cycle. An InterestAck cache 316 (i.e., InterestAck memory/storage 316) stores or caches InterestAcks received by node 300 so that the stored InterestAcks may be forwarded to various consumers as needed.

PIT 310 and FIB 312 together store state information, including node ingress and egress face information, for each Interest received and sent by ICN node 300 while traversing their respective paths in network 106 so that Data satisfying the Interest may trace the same path in reverse back to consumer 102 (i.e., the inverse path), which is referred to as "stateful forwarding" in an ICN network.

Processor 303 may use clocks/timers 303a to assist with measuring times and time delays in support of embodiments described herein.

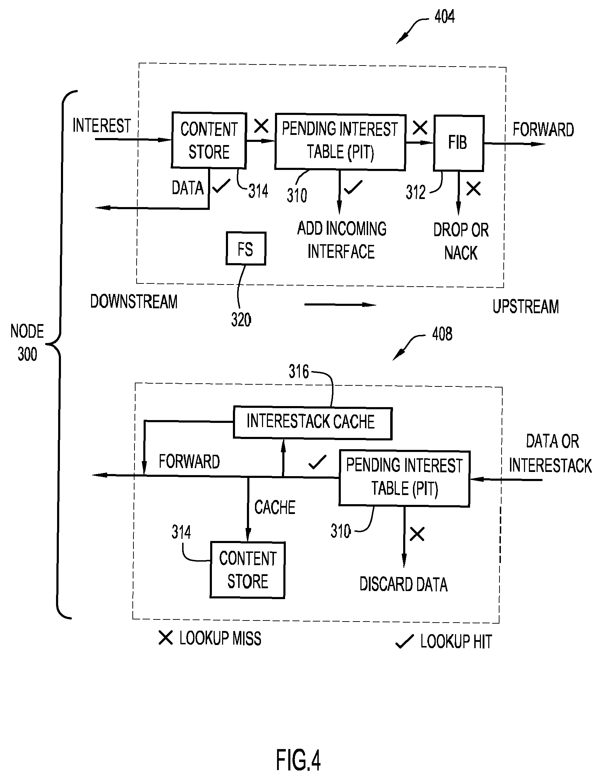

The general operation of ICN node 300 is now described with reference to FIG. 4, with continued reference to FIG. 3. FIG. 4 shows an Interest flow 404 through node 300 in an upstream or forward direction from consumer 102 to producer 104, and a resulting Data and InterestAck flow 408 through the node in a downstream or reverse/inverse direction. When an Interest arrives at node 300, the node checks Content Store 314 for matching data; if matching data exists, the node returns the Data packet on the interface/face of the node from which the Interest came. Otherwise node 300 looks up the name in PIT 310, and if a matching entry exists, it simply records the incoming interface of this Interest in the PIT entry. In the absence of a matching PIT entry, node 300 forwards the Interest toward the data producer via an outgoing interface (which is also recorded in the node) based on information in FIB 312 as well as the node's adaptive forwarding strategy as implemented by Forwarding Strategy (FS) module 320. When node 300 receives multiple Interests for the same name from the downstream nodes, in one embodiment the node may forward only the first of the received Interests upstream toward data producer 104, and drop the other duplicative Interests. FIB 312 is populated by a name-prefix based routing protocol, and can have multiple output interfaces for each prefix.

Forwarding Strategy module 320 may decide to drop or negatively acknowledge an Interest in certain situations, e.g., if all upstream links are congested or the Interest is suspected to be part of a malicious attack. For each Interest, Forwarding Strategy module 320 may retrieve the longest-prefix matched entry from FIB 312, and decide when and where to forward the Interest. Content Store 314 is a temporary cache of Data packets node 300 has received. Because a Data packet is meaningful independent of where it comes from or where it is forwarded, it can be cached to satisfy future Interests.

When a Data packet arrives at node 300, the node may find the matching PIT entry, and forward the Data packet to all downstream interfaces/faces listed in that PIT entry. Node 300 may remove that PIT entry, and optionally caches the Data in Content Store 314. Data packets take the reverse path of Interests, and, in the absence of packet losses, one Interest packet results in one Data packet that satisfies the Interest on each link, providing flow balance. Neither Interest nor Data packets carry any host or interface addresses; ICN routes/forward Interest packets toward data producers based on the names carried in the packets, and forwards Data packets to consumers based on the PIT state information set up by the Interests at each hop. This Interest/Data packet exchange symmetry induces a hop-by-hop control loop, and may reduce or eliminate the need for source or destination addresses in data delivery.

Similar to when a Data packet arrives at node 300, when an InterestAck acknowledging an Interest arrives at the node, the node searches for a matching PIT entry. If a matching PIT entry is not found, the node discards the InterestAck. On the other hand, if a matching PIT entry is found, the node stores the InterestAck into InterestAck cache 316 and processes the InterestAck in accordance with embodiments described below. For example, node 300 forwards the InterestAck to consumer 102 along the same reverse path traversed by the Interest that the InterestAck acknowledges. In another example, node 300 may forward the cached InterestAck to consumer 102 or other consumers.

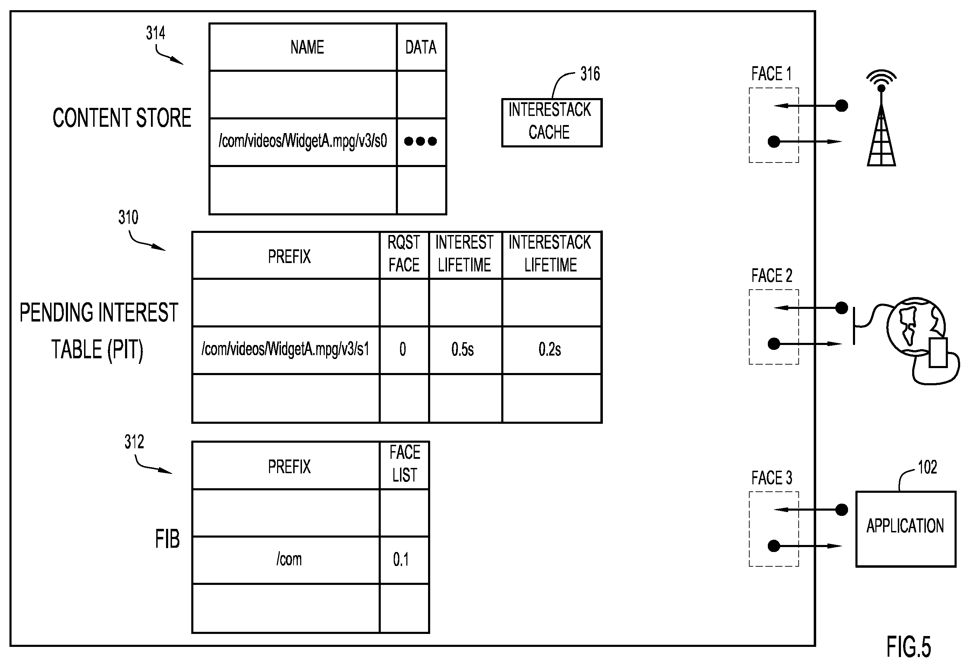

With reference to FIG. 5, there is a detailed illustration of example data structures corresponding to the node data structures introduced in connection with FIG. 3. Also depicted in FIG. 5 are example node interfaces/faces F1-F3 for receiving and sending Interests and Data to satisfy the Interest, as well as InterestAcks. Ingress and egress faces F1-F3 for a given Interest, InterestAck, and Data corresponding to that Interest are tracked in PIT 310 and FIB 312.

In PIT 310, each PIT entry, which is populated based on a corresponding Interest, may include a name prefix carried in the Interest, and a node interface/face from which the Interest was received, and an Interest lifetime for the Interest as specified in the Interest. If an InterestAck has been received to acknowledge a forwarded Interest, the PIT entry for that Interest may also include an InterestAck lifetime as specified in the Interest.

In FIB 312, each FIB entry may include the above-mentioned prefix, a list of node interfaces/faces on which the Interest associated with a given data object name may be forwarded.

In Content Store 314, each entry may include a name of the content in that entry, the data content, and, in some embodiments, an Actual Data Size of the data content, in bytes, for example.

InterestAck Cache 316 may store received InterestAcks for their corresponding InterestAck lifetimes. InterestAck Cache 316 may be an extension of Content Store 314 or separated from the Content Store.

Data structures in node 300 may also include an index (not shown) that points to corresponding entries for a given Interest/Data in each of Content Store 314, PIT 310, and FIB 312.

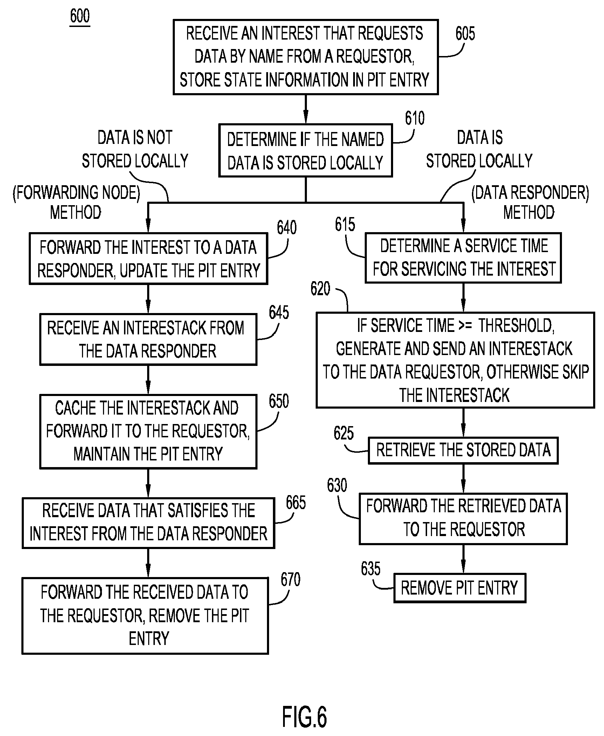

Various embodiments related to InterestAcks are summarized in methods described below in connection with FIGs. 6-8.

With reference to FIG. 6, a flowchart is shown of a method 600 of processing Interests (200) and InterestAcks (211) performed in node 300. In method 600, node 300 may operate in dual roles as both a data responder (right-side operations 615-635) and an intermediate/forwarding node (non-data responder) (left-side operations 640-670). In either case, it is assumed that node 300 implements stateful (i.e., state-based) forwarding of Interests (200), Data packets (220), and InterestAcks (211) in which the node stores state information in entries of PIT 310. Each PIT entry associates incoming and outgoing faces of the node traversed by an Interest with a data name of data requested by the Interest, so as to enable (i) forwarding of the Interest along the path to the data responder, (ii) forwarding of an InterestAck that acknowledges the Interest along a path in reverse of the Interest to consumer 102, and (iii) forwarding of a Data packet that satisfies the Interest along the reverse path to the consumer.

At 605, node 300 receives an Interest as the Interest traverses an Interest path from consumer 102 (referred to as "requestor" in FIG. 6) to a data responder. The Interest requests data/content by name and includes an Interest lifetime. In response, node 300 may create a PIT entry in PIT 310 for the received Interest, and store state information related to the Interest in the PIT entry. The stored PIT state information may include the data name from the Interest and the incoming faces among faces 301 traversed by the Interest.

At 610, node 300 determines whether the named data is already stored in content store 314 and thus accessible to the node. If it is determined that the named data is stored in content store 314, then node 300 operates as a data responder to satisfy the Interest and flow proceeds to next steps 615-635. As a data responder, node 300 may be either a data producer, such as data producer 104, with authoritative control over the named content/data in content store 314, or an intermediate node among nodes 110 that has named data cached in the content store as a result of a previous Interest-Data packet transaction.

In one embodiment, node 300 determines whether to generate and forward an InterestAck to consumer 102 based on a node service time for servicing the Interest, as described below at 615-620.

At 615, node 300 determines a service time for servicing the Interest, i.e., a time between when the Interest was received and when retrieved data will be ready to be forwarded from node 300. The service time may be estimated based on current processing load in node 300, or measured using clocks/timers 303a.

At 620, node 300 determines whether the determined service time is greater than or equal to a predetermined threshold service time, e.g., 2 seconds. If yes, node 300 generates an InterestAck acknowledging the Interest, and forwards the Interest Ack to consumer 102 on a path in reverse of the path traversed by the Interest (i.e., the reverse path). If no, no InterestAck is generated. The determine operation at 620 is optional, and may be skipped entirely.

In another embodiment, node 300 automatically generates and forwards the InterestAck responsive to determining that the node can satisfy the Interest, without regard to the service time.

In other embodiments, a network stack in node 300 may be configured to generate and forward the InterestAck for certain data names or data name prefixes; in even further embodiments, an application running on the node may receive the incoming Interest and in response, issue the InterestAck.

At 625, node 300 retrieves the locally stored data named in the Interest and generates a Data packet incorporating the retrieved data.

At 630, node 300 forwards the Data packet to consumer 102 on the reverse path based on the PIT entry.

At 635, node 300 removes the PIT entry corresponding to the Interest.

Returning to operation 610, if the named data is not stored locally in content store 314, then node 300 operates as an intermediate forwarding node, not a data responder, and flow proceeds to next steps 640-670.

At 640, node 300 forwards the Interest from one or more of faces 301 of the node along the Interest path to a data responder based on the forwarding information that applies to the Interest, and updates the PIT entry and/or FIB 312 to include the forwarding faces.

At 645, after node 300 forwards the Interest to the data responder, the node receives an InterestAck from the data responder, acknowledging receipt of the Interest at the data responder (see operation 620).

At 650, node 300 caches the received InterestAck in InterestAck cache 316 and forwards the InterestAck to consumer 102. Node 300 maintains the PIT entry for the Interest after forwarding the InterestAck.

At 665, node 300 receives a Data packet satisfying the Interest from the data responder that sent the InterestAck.

At 670, node 300 forwards the received Data packet to consumer 102 based on the state information in the PIT entry. Then, node 300 removes the PIT entry and the corresponding cached InterestAck.

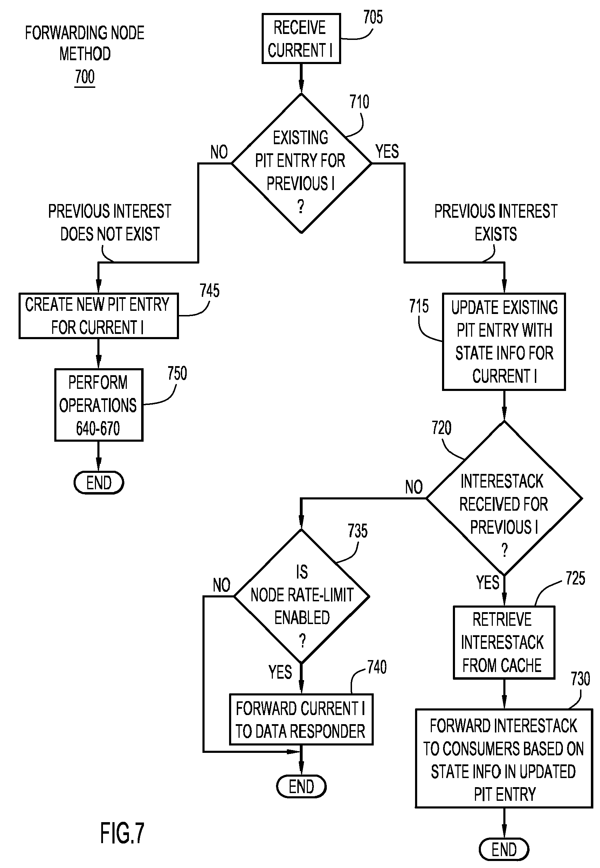

An Interest retransmission embodiment, described below in connection with FIG. 7, permits node 300 to re-transmit/re-forward Interests that have been recorded in PIT by node 300 (i.e., have corresponding PIT entries), if the node supports rate-limited operation, i.e., if the node supports rate-limited retransmissions/re-forwarding of the Interests. In such an embodiment, when node 300 receives a current Interest and finds an existing PIT entry for the data name in that Interest (which indicates the receipt of a previous Interest), the node adds state information for the new Interest to the existing PIT entry. In addition, node 300 determines whether an InterestAck message has been received for the data name in the PIT entry. If so, node 300 returns a copy of the InterestAck to consumer 102. If not, and if node 300 is rate-limiting enabled, the node forwards the current (2^{nd}) Interest to a data responder. Rate-limiting is helpful to restrict a potential for packet-flooding as a denial-of-service (DOS) attack. The rate-limiting may be configurable, associated with some broader policy, including policies based on ingress (i.e., incoming) faces, a data name prefix, and/or dynamic context such as load or redundancy status. The Interest retransmission embodiment is described further in connection with FIG. 7.

With reference to FIG. 7, a flowchart is shown of a method 700 of processing InterestAcks and retransmitting Interests performed in node 300. In method 700, node 300 operates as an intermediate forwarding node, not a data responder. In the flowchart of FIG. 7, an Interest is represented as "I."

At 705, node 300 receives a current Interest, requesting data by name. The current Interest also includes indications of an Interest lifetime and an InterestAck lifetime.

At 710, node 300 determines if a previous Interest requesting the same data as the current Interest has been received at the node. To do this, node 300 searches PIT 310 for an existing PIT entry that lists the named data, indicating that a previous Interest has been received. The existence of such a PIT entry indicates that a previous Interest requesting the same data has been received, and the absence of such a PIT entry indicates that a previous Interest has not been received. If node 300 finds an existing PIT entry that names the data, flow proceeds to 715, otherwise flow proceeds to 745.

At 715, node 300 updates the existing PIT entry with current state information associated with the current Interest, such as the incoming face on which the current Interest was received and the current Interest lifetime listed in the current Interest.

At 720, node 300 determines if an InterestAck acknowledging the previous Interest has been received (i.e., an InterestAck that includes the data name as in the previous and current Interests). To do this, node 300 may search for an existing InterestAck that names the data in InterestAck cache 316, or search the existing PIT entry for a valid InterestAck lifetime. If it is determined that such an InterestAck has been received, flow proceeds to 725, and otherwise flow proceeds to 735.

At 725, node 300 retrieves the InterestAck acknowledging the previous Interest from InterestAck cache 316.

At 730, node 300 forwards the retrieved InterestAck to at least the current consumer based on the incoming faces among faces 301 listed in the existing PIT entry. Node 300 forwards the InterestAck from all faces listed in the existing PIT entry to corresponding consumers linked to those faces. In an example in which the previous consumer is the same as the current consumer, the InterestAck will be forwarded from a single face listed in the existing PIT entry along a reverse path (from that traversed by the current Interest) to the current consumer. In another example in which the previous and current consumers are different, the InterestAck will likely be forwarded from at least two faces listed in the existing PIT entry, each face linking back to a corresponding one of the different previous and current consumers such that the InterestAck will traverse two paths in reverse, one to the previous consumer, the other to the current consumer.

Examples of operations 725 and 730 that use InterestAck cache 316 are:
a. Assume at a time t1, an initial or first Interest arrives at node 300 from a first consumer C1 (this corresponds to the previous Interest from the previous consumer in the description above);
b. Assume at a time t2 > t1, an InterestAck arrives at the node from a data responder, and that the node caches the InterestAck in InterestAck cache 316; and
c. Assume at a time t3 > t2, a second Interest arrives at the node from a second consumer C2 (this corresponds to the current Interest from the current consumer in the description above).

Normally, second consumer C2 will not receive an InterestAck acknowledging the second Interest from the data responder unless node 300 forwards the second Interest to the data responder, which may be an inefficient use of network resources. Thus, node 300 forwards the InterestAck, cached in the node at time t2, to consumer C2 to indicate that an earlier/previous copy of the Interest (from consumer C1) was already acknowledged by the data responder. Node 300 performs normal PIT aggregation for the Interest from consumer C2, i.e., the Interest from consumer C2 is "folded into" the earlier Interest from consumer C1. If a Data message satisfying the first Interest from consumer C1 arrives before the PIT entry for the first Interest expires based on the Interest lifetime of the first Interest stored in the PIT entry, node 300 forwards the Data packet to both consumers C1 and C2.

Returning to 720, if it is determined that such an InterestAck has not been received (i.e., a previous Interest has been received, but an InterestAck corresponding to the previous Interest has not been received), flow proceeds to 735.

At 735, node 300 determines if it is enabled for rate-limited operation. If yes, flow proceeds to 740, where the node forwards the current Interest to the data responder. An example of rate-limited operation in node 300 includes (i) determining levels of traffic congestion at node faces 301 through which Interests and corresponding Data packets are conveyed, and (ii) adjusting data rates (i.e., increasing and decreasing the data rates) at which the faces operate responsive to the determined levels of traffic congestion.

If it is determined at 735 that rate limited operation is not enabled, method 700 ends.

Returning to 710, if the search of PIT 310 does not find an existing PIT entry corresponding to the named data (i.e., there is no previous Interest requesting the named data), flow proceeds to 745.

At 745, node 300 creates a new PIT entry for the current Interest and stores state information associated with the current Interest in the new PIT entry. Then flow proceeds to 750, where node 300 performs operations 640-670 of method 600.

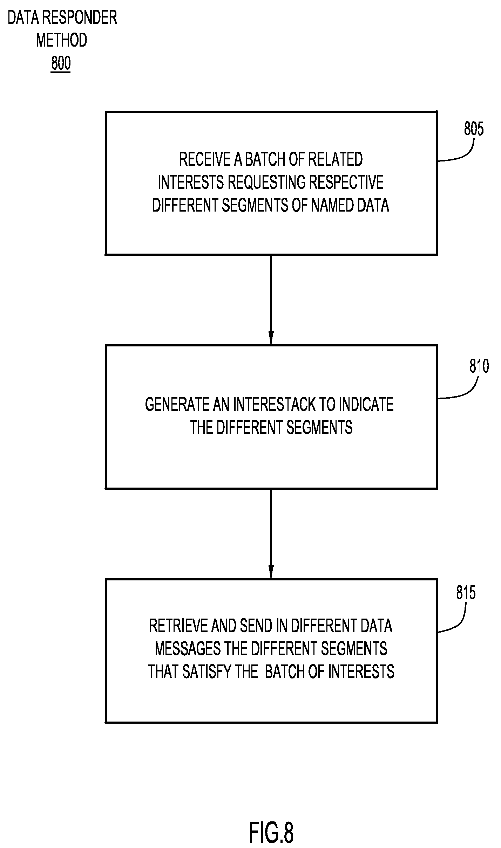

With reference to FIG. 8, there is a flowchart of a method 800 of performing batch Interest processing performed in node 300. At 805, node 300 receives a batch of related Interests requesting respective different segments of named data. At 810, node 300 generates a batch InterestAck to identify the different segments, as described above in connection with FIG. 2B. At 815, node 300 retrieves and sends the different segments that satisfy the batch of Interests in different respective Data packets.

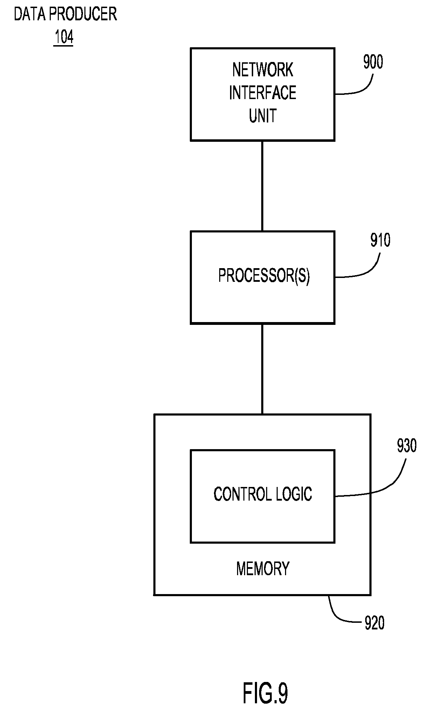

With reference to FIG. 9, a block diagram is shown for a device that may serve or operate as a data producer 104. Data producer 104 includes a network interface unit 900 configured to enable network communications to receive Interests from network 106 and send InterestAcks and Data packets to the network. One or more processors 910 are provided that execute software stored in memory 920. The processor(s) 910 is/(are) for example, a microprocessor or microcontroller. To this end, the memory 920 stores instructions for control logic 930. When the one or more processors 910 execute control logic 930, data producer performs 610-635 and 805-815.

Memory 920 may comprise read only memory (ROM), random access memory (RAM), magnetic disk storage media devices, optical storage media devices, flash memory devices, electrical, optical, or other physical/tangible memory storage devices. Thus, in general, the memory 920 may comprise one or more tangible (non-transitory) computer readable storage media (e.g., a memory device) encoded with software comprising computer executable instructions and when the software is executed (by the processor(s) 910) it is operable to perform the operations described herein.

In summary, embodiments presented herein introduce an InterestAck to acknowledge one or more corresponding Interests and related ICN processing to resolve problems associated with ICN PIT lifetimes. Embodiments also use PIT processing to permit retransmissions of Interests that may be lost in transit from a consumer to a data responder. The embodiments allow ICN-related protocols to distinguish between network processing used in forwarding packets and application processing (service time), which tend to operate at significantly different time-scales. The embodiments permit requesting clients/consumers to identify Interest messages loss in RTT-order, and attempt to recover by retransmitting Interests. The embodiments permit the return path to remain in a router node PIT during the time required for application processing at a data responder. The InterestAck is compact and thus its impact on congestion should be minimal, and can be further reduced through use of compacted names, and batching.

In one form, a method is provided comprising: at a network device among network devices configured to perform information centric networking (ICN): receiving an Interest having traversed a path in the ICN network from a consumer, the Interest requesting data by name; and determining whether data satisfying the Interest is available in the network device, and if it is determined that data satisfying the Interest is available in the network device: generating an Interest acknowledgement (InterestAck) that includes the data name; forwarding the InterestAck to the consumer along the path in reverse based on the data name; retrieving the data satisfying the Interest; and forwarding the data along the reverse path based on the data name.

In another form, an apparatus is provided comprising: a plurality of network faces to send and receive information centric networking (ICN) packets to and from an ICN network; a packet forwarding unit to forward the ICN packets between the network faces; and a processor coupled to the forwarding unit and the network faces, wherein the processor: receives an Interest having traversed a path in the ICN network from a consumer, the Interest requesting data by name; and determines whether data satisfying the Interest is available in the network device, and if it is determined that data satisfying the Interest is available in the network device: generates an Interest acknowledgement (InterestAck) that includes the data name; forwards the InterestAck to the consumer along the path in reverse based on the data name; retrieves the data satisfying the Interest; and forwards the data along the reverse path based on the data name.

In yet another form, a non-transitory tangible computer readable storage media encoded with instructions is provided. The instructions, when executed by a processor of a network device configured to perform information centric networking (ICN) in an ICN network, cause the processor to: receive an Interest having traversed a path in the ICN network from a consumer, the Interest requesting data by name; and determine whether data satisfying the Interest is available in the network device, and if it is determined that data satisfying the Interest is available in the network device: generate an Interest acknowledgement (InterestAck) that includes the data name; forward the InterestAck to the consumer along the path in reverse based on the data name; retrieve the data satisfying the Interest; and forward the data along the reverse path based on the data name.

In a further form, a method is provided comprising: at a network device among network devices configured to perform information centric networking (ICN) in an ICN network: receiving a current Interest from a current consumer as the current Interest traverses a current path from the current consumer to a data responder, the current Interest requesting data by name; determining if a previous Interest requesting the named data has been received; if a previous Interest requesting the named data has been received, determining if an Interest acknowledgement (InterestAck) acknowledging the previous Interest has been received from a data responder; and if an InterestAck acknowledging the previous Interest has been received, forwarding a copy of the InterestAck to the current consumer along the current path in reverse, without forwarding the current Interest to the data responder.

In an even further form, an apparatus is provided comprising: a plurality of network faces to send and receive information centric networking (ICN) packets to and from an ICN network; a packet forwarding unit to forward the ICN packets between the network faces; and a processor coupled to the forwarding unit and the network faces, wherein the processor: receives a current Interest from a current consumer as the current Interest traverses a current path from the current consumer to a data responder, the current Interest requesting data by name; determines if a previous Interest requesting the named data has been received; if a previous Interest requesting the named data has been received, determines if an Interest acknowledgement (InterestAck) acknowledging the previous Interest has been received from a data responder; and if an InterestAck acknowledging the previous Interest has been received, forwards a copy of the InterestAck to the current consumer along the current path in reverse, without forwarding the current Interest to the data responder.

In yet another form, a non-transitory tangible computer readable storage media encoded with instructions is provided. The instructions, when executed by a processor of a network device configured to perform information centric networking (ICN) in an ICN network, cause the processor to: receive a current Interest from a current consumer as the current Interest traverses a current path from the current consumer to a data responder, the current Interest requesting data by name; determine if a previous Interest requesting the named data has been received; if a previous Interest requesting the named data has been received, determine if an Interest acknowledgement (InterestAck) acknowledging the previous Interest has been received from a data responder; and if an InterestAck acknowledging the previous Interest has been received, forward a copy of the InterestAck to the current consumer along the current path in reverse, without forwarding the current Interest to the data responder.

Embodiments of the disclosure provide an apparatus comprising: a plurality of network faces to send and receive information centric networking (ICN) packets to and from an ICN network; a packet forwarding unit to forward the ICN packets between the network faces; and a processor coupled to the forwarding unit and the network faces, wherein the processor: receives an Interest having traversed a path in the ICN network from a consumer, the Interest requesting data by name; and determines whether data satisfying the Interest is available in the network device, and if it is determined that data satisfying the Interest is available in the network device: generates an Interest acknowledgement (InterestAck) that includes the data name; forwards the InterestAck to the consumer along the path in reverse based on the data name; retrieves the data satisfying the Interest; and forwards the data along the reverse path based on the data name.

The processor may store state information that associates an incoming face of the network device traversed by the Interest with the data name to enable the forwarding of the InterestAck and the data along the reverse path based on the state information. If it is determined that data satisfying the Interest is not available: the processor may skip the operations that generate, forward the InterestAck, retrieve, and forward the data; and forward the Interest to a data responder based on the data name. If it is determined that data satisfying the Interest is available, before performing the operation that generates the InterestAck, the processor may determine an expected service time to service the Interest; if the expected service time is less than a predetermined threshold service time, the processor may skip the operations that generate and forward the InterestAck; and if the expected service time is greater than or equal to the predetermined threshold service time, the processor may perform the operations that generate and forward the InterestAck, optionally the processor may generate the InterestAck to include the expected service time for servicing the Interest. The processor may receive a batch of related Interests requesting respective ones of different segments of the named data; and the processor may generate the InterestAck to indicate the different segments. The processor may: hash the data name to a hashed name; and generate the InterestAck to include the hashed name in place of the data name and an indicator to indicate the InterestAck includes the hashed named.

Embodiments of the present disclosure provide a network device configured for information centric networking (ICN) receives an Interest having traversed a path in an ICN network from a consumer. The Interest requests data by name. The network device determines whether data satisfying the Interest is available in the network device, and if it is determined that data satisfying the Interest is available in the network device, the network device generates an Interest acknowledgement (InterestAck) that includes the data name. The network device forwards the InterestAck to the consumer along the path in reverse based on the data name. The network device retrieves the data satisfying the Interest, and forwards the data along the reverse path based on the data name.

The above description is intended by way of example only.

## Claims

1. A method comprising:
at a network device among network devices configured to perform information centric networking (ICN):
receiving an Interest having traversed a path in the ICN network from a consumer, the Interest requesting data by name; and
determining whether data satisfying the Interest is available in the network device, and if it is determined that data satisfying the Interest is available in the network device:
generating an Interest acknowledgement (InterestAck) that includes the data name;
forwarding the InterestAck to the consumer along the path in reverse based on the data name;
retrieving the data satisfying the Interest; and
forwarding the data along the reverse path based on the data name.

2. The method of claim 1, further comprising:
storing state information that associates an incoming face of the network device traversed by the Interest with the data name to enable the forwarding of the InterestAck and the data along the reverse path based on the state information.

3. The method of claim 1 or 2, further comprising, if it is determined that data satisfying the Interest is not available:
skipping the generating, the forwarding the InterestAck, the retrieving, and the forwarding the data; and
forwarding the Interest to a data responder based on the data name.

4. The method of claim 1, 2 or 3, further comprising:
if it is determined that data satisfying the Interest is available, before generating the InterestAck, determining an expected service time to service the Interest;
if the expected service time is less than a predetermined threshold service time, skipping the generating and the forwarding the InterestAck; and
if the expected service time is greater than or equal to the predetermined threshold service time, performing the generating and the forwarding the InterestAck, optionally generating the InterestAck to include the expected service time for servicing the Interest.

5. The method of any preceding claim, wherein:
the receiving includes receiving a batch of related Interests requesting respective ones of different segments of the named data; and
the generating includes generating the InterestAck to indicate the different segments.

6. The method of any preceding claim, further comprising:
hashing the data name to a hashed name,
wherein the generating includes generating the InterestAck to include the hashed name in place of the data name and an indicator to indicate the InterestAck includes the hashed named.

7. The method of any preceding claim, wherein the generating includes generating the InterestAck to include a lifetime of the InterestAck after which the InterestAck expires.

8. A method comprising:
at a network device among network devices configured to perform information centric networking (ICN) in an ICN network:
receiving a current Interest from a current consumer as the current Interest traverses a current path from the current consumer to a data responder, the current Interest requesting data by name;
determining if a previous Interest requesting the named data has been received;
if a previous Interest requesting the named data has been received, determining if an Interest acknowledgement (InterestAck) acknowledging the previous Interest has been received from a data responder; and
if an InterestAck acknowledging the previous Interest has been received, forwarding a copy of the InterestAck to the current consumer along the current path in reverse, without forwarding the current Interest to the data responder.

9. The method of claim 8, further comprising: if a previous Interest from a previous consumer and an InterestAck have been received, and if the previous consumer is different from the current consumer, the forwarding includes:
forwarding the InterestAck to the current consumer along the current path in reverse.

10. The method of claim 8 or 9, further comprising:
if a previous Interest has not been received, forwarding the current Interest to a data responder.

11. The method of claim 8, 9 or 10, further comprising:
if a previous Interest has been received and an InterestAck has not been received, determining if rate-limited forwarding of Interests is enabled in the network device; and
if rate-limited forwarding of Interests is enabled, forwarding the current Interest to the data responder; and
if rate-limited forwarding of Interests is not enabled, skipping forwarding the current Interest to the data responder.

12. The method of claim 8, 9, 10 or 11, further comprising:
maintaining a pending interest table (PIT) having entries each of which stores state information that associates one or more incoming faces and one or more outgoing faces of the network device traversed by a corresponding Interest with the name of data requested by the Interest,
wherein the determining if a previous Interest has been received includes:
searching for a PIT entry that includes the data name; and
declaring that a previous Interest has been received or has not been received if the searching finds a PIT entry that includes the named data or does not find a PIT entry that includes the named data, respectively,
optionally the method further comprising:
if a PIT entry is found, determining if the PIT entry indicates that the previous consumer is different from the current consumer; and
if the previous consumer is different from the current consumer, updating the found PIT entry with state information corresponding to the current Interest.

13. The method of any of claims 8 to 12, further comprising:
retrieving the InterestAck from a local cache of previously received InterestAcks originated from corresponding data responders, each of the cached InterestAcks acknowledging a corresponding previously forwarded Interest,
wherein the forwarding includes forwarding the retrieved InterestAck.

14. An apparatus comprising:
a plurality of network faces to send and receive information centric networking (ICN) packets to and from an ICN network;
a packet forwarding unit to forward the ICN packets between the network faces; and
a processor coupled to the forwarding unit and the network faces, wherein the processor is configured to carry out the method of any of the preceding claims.

15. A computer readable storage medium comprising instructions that, when executed, cause a processor to carry out the method of any of claims 1 to 13.
